(19) **Europäisches Patentamt / European Patent Office / Office européen des brevets**

(11) **EP 4 632 847 A1**

(12) **EUROPEAN PATENT APPLICATION**
published in accordance with Art. 153(4) EPC

(43) Date of publication:
**15.10.2025   Bulletin 2025/42**

(21) Application number: **24873036.8**

(22) Date of filing: **27.09.2024**

(51) International Patent Classification (IPC):
$H01M\ 4/62^{(2006.01)}$    $H01M\ 4/131^{(2010.01)}$
$H01M\ 4/525^{(2010.01)}$    $H01M\ 4/134^{(2010.01)}$
$H01M\ 4/38^{(2006.01)}$    $H01M\ 10/052^{(2010.01)}$
$H01B\ 1/04^{(2006.01)}$    $H01B\ 5/02^{(2006.01)}$

(52) Cooperative Patent Classification (CPC):
**H01B 1/04; H01B 5/02; H01M 4/131; H01M 4/134; H01M 4/38; H01M 4/525; H01M 4/62; H01M 10/052; Y02E 60/10**

(86) International application number:
**PCT/KR2024/014720**

(87) International publication number:
**WO 2025/071329 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:   27.09.2023   KR 20230131249

(71) Applicant: **LG Energy Solution, Ltd.**
**Seoul 07335 (KR)**

(72) Inventors:
• **KIM, Young Jae**
  **Daejeon 34122 (KR)**
• **PARK, Joo Yong**
  **Daejeon 34122 (KR)**
• **LIM, Han Min**
  **Daejeon 34122 (KR)**
• **PARK, Sang Hyun**
  **Daejeon 34122 (KR)**
• **KIM, Cho Won**
  **Daejeon 34122 (KR)**
• **KIM, Tae Gon**
  **Daejeon 34122 (KR)**

(74) Representative: **Hoffmann Eitle**
**Patent- und Rechtsanwälte PartmbB**
**Arabellastraße 30**
**81925 München (DE)**

(54) **CONDUCTIVE MATERIAL, ELECTRODE COMPRISING SAME, AND LITHIUM SECONDARY BATTERY COMPRISING ELECTRODE**

(57)     The present invention is a conductive material satisfying a conductivity performance index $P_C$ of 0.03 to 8.10, wherein the conductivity performance index ($P_C$) is defined by the aspect ratio, powder resistance, and packing density when the powder resistance is measured, BET specific surface area, and volume cumulative average particle diameter $D_{50}$ as factors, and according to the present invention, it is possible to provide a conductive material capable of improving the performance of an electrode if satisfying a specific range by utilizing physical properties which may be related to resistance characteristics and lifespan characteristics of the electrode, such as the conductive material forming a conductive network connection path between active material particles and within an active material particle in the electrode, being arranged in pores, and being arranged on the surface of an active material, thereby clarifying and defining the relationship between the above-described physical properties.

**Description**

## TECHNICAL FIELD

The present invention relates to a conductive material having excellent conductivity performance, an electrode including the same, and a lithium secondary battery including the electrode.

## BACKGROUND ART

Demands for the use of alternative energy or clean energy are increasing due to the rapid increase in the use of fossil fuel, and as a part of this trend, the most actively studied field is a field of electricity generation and electricity storage using an electrochemical reaction.

Currently, a typical example of an electrochemical device using such electrochemical energy is a secondary battery and the usage areas thereof are increasing more and more. In recent years, as technology development of and demand for portable devices such as portable computers, mobile phones, and cameras have increased, demands for secondary batteries as an energy source have been significantly increased. Among such secondary batteries, lithium secondary batteries having a high energy density, that is, lithium secondary batteries having a high capacity, have been subjected to considerable research and also have been commercialized and widely used.

Meanwhile, in order to manufacture a battery having high energy density, it is important to apply a positive electrode active material having a high-capacity characteristic, but materials included in a positive electrode with the positive electrode active material may also act as an important factor. To this end, research has been conducted in the direction of maximizing the proportion of an active material and minimizing the content of a conductive material and a binder, but when the amount of an active material used increases, there is a problem in that an increase in the unit price of a cell is very large compared to the degree of improvement in the performance, which makes it not easy to apply the research to actual mass production.

Therefore, it has become a recent research trend to increase price competitiveness while satisfying a certain energy density or higher. In order to manufacture a battery having high energy density, various types of approaches are applicable, but the presence of auxiliary materials such as a conductive material and a binder, not main materials such as an active material, may also play an important role. Particularly, the performance of a conductive material differs greatly due to intrinsic characteristics of the material, such as conductivity, a form of the conductive material included in an electrode, linear dispersion, or the like.

Particularly, carbon black, a multi-walled carbon nanotube (MWCNT), or a single-walled carbon nanotube (SWCNT), which are widely used as conductive materials, differ greatly in conductivity even for the same material depending on number characteristics, dimensional characteristics, specific surface area, dispersion form, and shape characteristics, or the like. Accordingly, it is difficult to know what characteristics each conductive material should have in order to implement a high-performance electrode before conducting an actual experiment, and since there are cases in which there is a large difference in conductivity due to some other differences even for the same physical property, so that there is a need for in-depth research on this issue.

## DISCLOSURE OF THE INVENTION

## TECHNICAL PROBLEM

In order to solve the above-described problems, the present invention is to provide a conductive material which has excellent conductivity, and for which it is possible to identify how well the conductive material forms a conductive path on an electrode and how much the conductive material contributes to lowering resistance through a conductivity performance index reflecting number characteristics, dimensional characteristics, conductivity characteristics, shape characteristics, and the like of carbon-based particles.

In addition, the present invention is to provide a high-performance conductive material by reflecting conductivity characteristics and shape characteristics in a conductivity performance index even though each type of conductive material has different characteristics, thereby enabling mutual compensation to identify a conductivity performance index regardless of the type and shape of a conductive material, through which a high-energy density electrode may be implemented.

## TECHNICAL SOLUTION

[1] According to an embodiment of the present invention, there is provided a conductive material having a conductivity performance index $P_C$ satisfying 0.03 to 8.10, which is defined by Equation 1 below.

$$[\text{Equation 1}]$$

$$P_C = [(AR \times R_P \times \rho_P) \, / \, (BET \times D_{50})] \times 10^4$$

In Equation 1 above, AR is an aspect ratio, which is a ratio of a long axis to a short axis of the conductive material, $R_P$ and $\rho_P$ are respectively powder resistance (Qcm) and packing density (g/cc), wherein the powder resistance is $R_P$ as measured when the packing density is $\rho_P$ with respect to the conductive material, BET is a specific surface area ($m^2/g$) of the conductive material, and $D_{50}$ is a volume cumulative 50% average particle diameter ($\mu m$) of the conductive material in a powder state, wherein in Equation 1 above, $R_P$, $\rho_P$, BET, and $D_{50}$ are non-unit numbers in which the above-described units are excluded.

[2] In the conductive material of [1] above, the conductive material may include one or more selected from the group consisting of carbon black, multi-walled carbon nanotubes, and single-walled carbon nanotubes.

[3] In the conductive material of [1] and/or [2] above, the conductivity performance index may be 0.10 to 7.00.

[4] In at least one of the conductive materials of [1] to [3] above, the conductivity performance index may be 0.30 to 5.00.

[5] In at least one of the conductive materials of [1] to [4] above, the packing density $\rho_P$ may be 0.4 g/cc to 0.6 g/cc.

[6] In at least one of the conductive materials of [1] to [5] above, the conductive material may include carbon black, and the conductivity performance index may be 1.00 to 8.10.

[7] In at least one of the conductive materials of [1] to [6] above, the conductive material may include one or more selected from the group consisting of multi-walled carbon nanotubes, and single-walled carbon nanotubes, and the conductivity performance index may be 0.03 to 4.00.

[8] In at least one of the conductive materials of [1] to [7] above, the conductive material may include multi-walled carbon nanotubes, and the conductivity performance index may be 0.30 to 3.90.

[9] In at least one of the conductive materials of [1] to [8] above, the conductive material may include single-walled carbon nanotubes, and the conductivity performance index may be 0.03 to 1.50.

[10] According to another embodiment of the present invention, there is provided an electrode including an electrode current collector and an electrode active material layer disposed on the electrode current collector, wherein the electrode active material layer includes the above-described conductive material.

[11] In the electrode of [10] above, the electrode active material layer further includes a positive electrode active material, wherein the positive electrode active material may include one or more selected from the group consisting of a lithium nickel-based oxide and a lithium metal phosphate-based compound.

[12] In the electrode of [11] above, the positive electrode active material may be a single-particle type, and may have a degree of single-particleization $D_{50}/D_{mean}$ of 1 to 10, which is a ratio of a volume cumulative average particle diameter $D_{50}$ to an average particle diameter $D_{mean}$ of nodules.

[13] In the electrode of [11] and/or [12] above, the single particle-type lithium nickel-based oxide may have a composition represented by Formula 1 below, and the lithium metal phosphate-based compound may have a composition represented by Formula 2 below.

[Formula 1]     $Li_{1+x}Ni_aCo_bM^1_cM^2_dO_{2-e}X_e$

In Formula 1 above, $M^1$ includes one or more selected from Mn and Al, $M^2$ includes one or more selected from the group consisting of W, Zr, Y, Ba, Ca, Ti, V, Mg, Ta, and Nb, X includes one or more selected from the group consisting of N, P, S, F, and Cl, and $0 \leq x \leq 0.1$, $0.5 \leq a < 1$, $0 < b \leq 0.35$, $0 < c \leq 0.35$, $0 \leq d \leq 0.05$, and $0 \leq e \leq 0.05$.

[Formula 2]     $Li_{1+x}[Fe_{1-y}M_y]PO_4$

In Formula 2 above, M includes one or more selected from the group consisting of Mn, Co, Ni, Al, Mg, and Ti, and $-0.5 \leq x \leq 0.5$, and $0 \leq y < 1$.

[14] In the electrode of [10] above, the electrode active material layer may further include silicon-based particles.

[15] According to yet another embodiment of the present invention, there is provided a lithium secondary battery including a structure in which an electrode and a separator are alternately stacked, wherein the electrode is the same as the above-described electrode.

## ADVANTAGEOUS EFFECTS

For a conductive material according to the present invention, it is possible to identify how well the conductive material forms a conductive path on an electrode and how much the conductive material contributes to lowering resistance through a conductivity performance index reflecting number characteristics, dimensional characteristics, conductivity characteristics, shape characteristics, and the like of carbon-based particles, and by applying a conductive material having a conductivity performance index thus defined satisfying a specific range, it is possible to provide an electrode having excellent conductivity, thereby having excellent resistance characteristics.

In addition, it is possible to identify whether it is a high-performance conductive material by reflecting conductivity characteristics and shape characteristics in a conductivity performance index even though each type of conductive material has different characteristics, thereby enabling mutual compensation to identify a conductivity performance index regardless of the type and shape of a conductive material, through which a high-energy density electrode may be implemented.

## BEST MDOE FOR CARRYING OUT THE INVENTION

It will be understood that words or terms used in the specification and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

In the present specification, the terms "include," "comprise," or "have" are intended to specify the presence of stated features, numbers, steps, elements, or combinations thereof, and do not preclude the presence or addition of one or more other features, numbers, steps, elements, or combinations thereof.

In the present specification, a "specific surface area" is measured by a BET method, and specifically, may be calculated from the adsorption amount of nitrogen gas under a liquid nitrogen temperature (77K) using Belsorp-mino II of BEL Japan Co.

In the present invention, a "single-particle type" refers to a particle composed of 30 or fewer nodules, and a single particle-type particle is a concept including a single particle composed of one nodule and a pseudo-single particle, which is a composite of 2 to 30 nodules.

The "nodule" is a sub-particle unit constituting a single particle and a pseudo-single particle, and may be a single crystal with no crystalline grain boundaries, or a polycrystal with no grain boundaries in appearance when observed with a field of view of 5000 to 20000 times using a scanning electron microscope.

In the present invention, a "secondary particle" refers to a particle formed by the agglomeration of a plurality of tens to hundreds of primary particles. More specifically, the secondary particle is an agglomerate of 50 or more primary particles.

The term "particle" used in the present invention may include any one or all of a single particle, a pseudo-single particle, a primary particle, a nodule, and a secondary particle.

In the present invention, the "average particle diameter $D_{mean}$ of nodules" is obtained by photographing positive electrode active material particles with a scanning electron microscope (SEM), calculating the diameter of each nodule for about 30 particles including one or more nodules, and then utilizing an average value.

In the present specification, the "volume cumulative 50% average particle diameter $D_{50}$" may be defined as a particle diameter corresponding to 50% of the volume accumulation in a particle diameter distribution curve of a particle and a maximum value of the particle diameter. The $D_{50}$ may be measured by, for example, a laser diffraction method. The laser diffraction method generally enables measurement of a particle diameter from a sub-micron region to several millimeters, so that results of high reproducibility and high resolution may be obtained. Hereinafter, in the present specification, the "volume cumulative 50% average particle diameter $D_{50}$" may be referred to as 'volume cumulative average particle diameter,' '$D_{50}$,' or the like.

In the present specification, the "aspect ratio" may mean a ratio of the longest line to the shortest line among lines passing through the center of a particle and extending to the outer periphery, regardless of the shape of the particle, that is, whether the particle is linear, dot-shaped, or plate-shaped.

Hereinafter, the present invention will be described in detail.

A conductive material, an electrode, a lithium secondary battery according to the present invention include at least one among configurations described below, and may include any combination of technically possible configurations among the following configurations.

**Conductive material**

The conductive material according to an embodiment of the present invention has a conductivity performance index $P_C$ satisfying 0.03 to 8.10, which is defined by Equation 1 below.

$$[\text{Equation 1}]$$

$$P_C = [(AR \times R_P \times \rho_P) / (BET \times D_{50})] \times 10^4$$

In Equation 1 above, AR is an aspect ratio, which is a ratio of a long axis to a short axis of the conductive material, $R_P$ and $\rho_P$ are respectively powder resistance (Qcm) and packing density (g/cc), wherein the powder resistance is $R_P$ as measured when the packing density is $\rho_P$ with respect to the conductive material, BET is a specific surface area (m$^2$/g) of the conductive material, and $D_{50}$ is a volume cumulative 50% average particle diameter ($\mu$m) of the conductive material in a powder state, wherein in Equation 1 above, $R_P$, $\rho_P$, BET, and $D_{50}$ are non-unit numbers in which the above-described units are excluded.

The volume cumulative 50% average particle diameter according to an embodiment of the present invention is not measured in a dispersed state in an organic solvent, but is measured in a dry powder state under an aero condition, and is different from a value measured in a dispersion state, but may be identified to be substantially the same as the shape and size distributed and present in an active material layer of an electrode.

The conductivity performance index according to an embodiment of the present invention includes powder resistance, packing density, BET specific surface area, $D_{50}$, and aspect ratio as factors, as defined by Equation 1 above.

As described above, the performance of a conductive material is determined by various factors, and the factors may include dispersion environment/conditions, the shape or particle size of an active material on an electrode, and the porosity, but factors due to intrinsic characteristics of the conductive material may include shape characteristics, conductivity characteristics, number characteristics, and length characteristics. However, since the difference in the above-described characteristics is very large for each type of conductive material, and the difference in performance is also greatly exhibited depending on how each characteristic is combined, it is not easy to implement high performance in the application of a conductive material.

However, in the present invention, by establishing a specific relationship using the above-described characteristics as factors and parameterizing the relationship as a conductivity performance index, it can be expected to have not only an advantage in that it is possible to evaluate the conductivity performance of a conductive material regardless of the type of the conductive material, and to compare the conductivity performance between different conductive materials, but also an advantage in that it is possible to provide an electrode having excellent conductivity through a conductive material controlled to have the conductivity performance index in a specific numerical range.

The conductivity performance index is a relationship based on a ratio of the product of powder resistance and packing density to the product of specific surface area and $D_{50}$, wherein the specific surface area may reflect number characteristics of a conductive material, the $D_{50}$ may partially reflect length characteristics of the conductive material, and the powder resistance and the packing density may reflect conductivity characteristics of the conductive material, so that in the case of the powder resistance and the packing density, which are factors of the numerator, the smaller the product value, the better the conductivity, and in the case of the specific surface area and the $D_{50}$, which are factors of the denominator, the larger the product value, the more smoothly a conductive path can be formed in an electrode, and the more optimally the conductive path can be arranged in a pore within the electrode, so that it can be evaluated that the smaller the conductivity performance index, the higher the performance of the conductive material.

However, the powder resistance and the packing density, which are the factors of the numerator, need to be in a paired relationship as the powder resistance value is measured at the packing density. That is, a conductive material is measured under a specific packing density when measuring the powder resistance, and the packing density, which is a measurement reference value, and the powder resistance, which is a measurement result, are reflected in the conductivity performance index. The powder resistance according to the packing density is to simulate a state in an electrode, and the powder resistance is measured after compressing a conductive material to a certain pressure, and this is because a conductive material is usually present under pressure in a roll-pressed electrode. Accordingly, in general, when measuring powder resistance, the powder resistance is measured by compressing a conductive material to a density of approximately 50% of the true density.

However, according to an embodiment of the present invention, the powder resistance of the conductivity performance index may be a value as measured when the packing density is 0.4 g/cc to 0.6 g/cc. The conductive material is usually a carbon material, and thus, may have a true density of about 1.95 g/cc, and accordingly, a measured packing density may be about 1 g/cc. However, the conductivity performance index according to an embodiment of the present invention utilizes a powder resistance value measured after further compressing a conductive material to have a packing density of about 0.4 g/cc to 0.6 g/cc, and thus, may more accurately reflect conductive path formation and conductivity characteristics in a roll-pressed electrode.

That is, a portion in which resistance first increases in an electrode may be a pore generated due to a change in volume of an active material particle caused by intercalation and deintercalation of lithium, and the pore has a problem in which a path is disconnected due to lack, absence, or breakage of a conductive material, which may eventually lead to an increase in cell resistance. However, if conductivity is evaluated after adjusting the packing density to the above-described range, it is possible to more accurately evaluate the performance of a conductive material since the disconnection of a conductive path due to the generation of a pore as described above may be partially reflected, through which there is an advantage in that a high-energy density electrode may be provided.

In addition, the value of the powder resistance varies depending on the packing density at which the powder resistance is measured, and even if the powder resistance measured at a high packing density has the same value, there is a very high possibility that the value will vary if the powder resistance is measured by lowering the packing density according to various characteristics of the conductive material. Therefore, it may be necessary to relatively strictly drive the value of the powder resistance according to the packing density.

Furthermore, the conductivity performance index includes of an aspect ratio of a conductive material as a factor. The aspect ratio of a conductive material may be understood as a correction coefficient that actually corrects the intrinsic conductivity that each type of conductive material exhibits. For example, in the case of carbon black and carbon nanotubes, the corresponding conductive materials differ in intrinsic powder resistance value, which is due to the difference in the materials themselves, so that it may be difficult to evaluate the conductive materials on the same line, but if an aspect ratio is reflected together as a factor, the aspect ratio may play a role in compensating for the difference in intrinsic conductivity along with the reflection of length characteristics.

Accordingly, the conductivity performance index according to an embodiment of the present invention may be utilized as a parameter which allows the understanding that the smaller the conductivity performance index, the better performance a conductive material has, and for the implementation of a high-performance electrode, the conductivity performance index satisfies a range of 0.03 to 8.10 or less. If the conductivity performance index is less than 0.03, it can be considered a case in which the evaluation according to the conductivity performance index is not reflected in the performance of an electrode, and due to the specific surface area and the $D_{50}$ which are considerably larger than the powder resistance, a conductive material may be considered a conductive material having excellent performance at first, but there may be unexpected secondary problems. For example, an excessively large specific surface area may cause aggregation between conductive material particles, and requires considerable difficulty in uniform dispersion in a dispersion and uniform distribution in an electrode, so that it is difficult for a conductivity performance index thus evaluated to be reflected in the performance evaluation of the electrode. In addition, if the conductive performance index is greater than 8.10, the conductivity itself may be reduced because conductivity characteristics are not as supportive as number or length characteristics, or the formation of a conductive path may not be facilitated due to the number or length which make it difficult to perform the function of locating a pore of an electrode and being arranged therein.

Therefore, the conductivity performance index may preferably be 0.05 or greater, 0.10 or greater, 0.20 or greater, 0.30 or greater, 0.40 or greater, or 0.50 or greater, and 7.50 or less, 7.00 or less, 6.50 or less, 6.00 or less, 5.50 or less, 5.00 or less, or 4.50 or less.

In other words, the conductivity performance index reflects intrinsic properties of a conductive material, such as shape characteristics, conductivity characteristics, number characteristics, and length characteristics, and these characteristics may play an important role in performing functions in distributing a conductive material in an electrode, such as connecting between active material particles, connecting between primary particles in a secondary particle if an active material is the secondary particle, and arranging in a pore between the active material particles, thereby eliminating a factor that increases resistance caused by the presence of empty spaces. Particularly, in an electrode with an increased roll-pressing density, there are many problems such as damage to an active material, disconnection of a conductive path between particles, or the like even when carbon nanotubes excellent in length characteristics are applied, but as described above, a conductive material that takes into account the conductivity performance index may have a maximized function in a high roll-pressing density electrode, i.e., an electrode that aims to maximize energy density.

According to an embodiment of the present invention, the conductive material may include one or more selected from the group consisting of carbon black, multi-walled carbon nanotubes, and single-walled carbon nanotubes.

Specifically, according to an embodiment of the present invention, the conductive material may include carbon black, in which case a preferred conductivity performance index may be 1.00 to 8.10. Carbon black is most commonly used as a dotted conductive material, but carbon black having a large specific surface area is not utilized due to the presence of carbon nanotubes, and is not utilized as a conductive material for an electrode which requires to have high energy density. However, even if carbon black is utilized, if carbon black having a large specific surface area and an appropriately sized $D_{50}$, and having a conductivity performance index satisfying 1.00 to 8.10 is utilized, it is possible to implement an electrode having high energy density and excellent resistance characteristics.

Accordingly, if carbon black is included as the conductive material, the conductivity performance index may preferably be 1.20 or greater, 1.30 or greater, 1.40 or greater, 1.50 or greater, or 1.60 or greater, and 7.00 or less, 6.70 or less, 6.50 or less, 6.00 or less, 5.50 or less, 5.00 or less, or 4.50 or less.

In addition, the carbon black applied at this time may have a specific surface area of 280 $m^2/g$ to 1,200 $m^2/g$. The specific surface area may preferably be 285 $m^2/g$ or greater, 290 $m^2/g$ or greater, or 295 $m^2/g$ or greater, 1,100 $m^2/g$ or less, 1,050 $m^2/g$ or less, 1,000 $m^2/g$ or less, 950 $m^2/g$ or less, 900 $m^2/g$ or less, 800 $m^2/g$ or less, 700 $m^2/g$ or less, or 600 $m^2/g$ or less.

In addition, the carbon black may have a $D_{50}$ of 0.6 $\mu$m to 1.5 $\mu$m. Preferably, the $D_{50}$ may be 0.7 $\mu$m or greater, 0.8 $\mu$m or greater, or 0.9 $\mu$m or greater, and 1.4 $\mu$m or less, 1.3 $\mu$m or less, or 1.2 $\mu$m or less.

As described above, if carbon black having a relatively high specific surface area and an appropriately sized $D_{50}$ is applied, it is easy to satisfy the conductivity performance index, so that it is possible to implement a high-performance electrode even if carbon black having excellent unit price competitiveness is used.

In this case, the carbon black may have powder resistance of 0.1 $\Omega$cm to 0.3 Qcm, 0.12 $\Omega$cm or greater, 0.13 $\Omega$cm or greater, or 0.14 $\Omega$cm or greater, and 0.26 $\Omega$cm or less, 0.24 $\Omega$cm or less, or 0.22 $\Omega$cm or less, as measured at a packing density 0.4 g/cc to 0.6 g/cc.

According to an embodiment of the present invention, the conductive material may include one or more selected from the group consisting of multi-walled carbon nanotubes, and single-walled carbon nanotubes, and the conductivity performance index may be 0.03 to 4.00.

Specifically, according to an embodiment of the present invention, the conductive material may include multi-walled carbon nanotubes, in which case the conductivity performance index may be 0.30 to 3.90. The multi-walled carbon nanotubes are subjected to a relatively large change in physical properties or particle size due to dispersion, so that if long multi-walled carbon nanotubes having a large specific surface area are used, there is a high possibility of encountering the above-described problems. However, in the present invention, as a means to solve the above-described problems, an aspect ratio, a specific surface area, and a $D_{50}$ in a powder state are selected, and the relationship therebetween is clarified in order to implement a high-energy density electrode through optimal uniform distribution in an electrode, so that a conductivity performance index is introduced in the relationship with powder resistance.

Accordingly, the multi-walled carbon nanotubes may have a specific surface area of 150 $m^2/g$ to 300 $m^2/g$. The specific surface area may preferably be 160 $m^2/g$ or greater, 165 $m^2/g$ or greater, or 170 $m^2/g$ or greater, and 295 $m^2/g$ or less, 290 $m^2/g$ or less, 285 $m^2/g$ or less, 280 $m^2/g$ or less, 275 $m^2/g$ or less, or 270 $m^2/g$ or less.

In addition, the multi-walled carbon nanotubes may have a $D_{50}$ of 2.0 $\mu$m to 4.0 $\mu$m in a powder state. Preferably, the $D_{50}$ may be 2.2 $\mu$m or greater, 2.3 $\mu$m or greater, or 2.5 $\mu$m or greater, and 3.8 $\mu$m or less, 3.7 $\mu$m or less, 3.6 $\mu$m or less, or 3.5 $\mu$m or less.

In addition, the multi-walled carbon nanotubes may have an aspect ratio of 3 to 8, preferably 3.5 or greater, or 4.5 or greater, and 7 or less, 6.5 or less, 6 or less, or 5.5 or less.

As described above, the uniform distribution in an electrode may be induced by appropriately adjusting a specific surface area of an appropriate level, a $D_{50}$ in a powder state, and an aspect ratio, and the disconnection of a conductive path may be minimized even in a pore generated by an electrochemical reaction of a cell.

In this case, the multi-walled carbon nanotubes may have powder resistance of 0.02 $\Omega$cm to 0.06 Qcm, 0.022 $\Omega$cm or greater, 0.023 $\Omega$cm or greater, or 0.025 $\Omega$cm or greater, and 0.055 $\Omega$cm or less, 0.053 $\Omega$cm or less, or 0.05 $\Omega$cm or less, as measured at a packing density 0.4 g/cc to 0.6 g/cc.

Specifically, according to an embodiment of the present invention, the conductive material may include single-walled carbon nanotubes, in which case the conductivity performance index may be 0.03 to 1.50. The single-walled carbon nanotubes are a conductive material with a very high degree of difficulty in dispersion, and is known to be a conductive material capable of securing conductivity with only a small amount of use due to a high specific surface area thereof, but in practice, it is difficult to sufficiently express length characteristics of the single-walled carbon nanotubes in an electrode, and it is not easy to uniformly distribute the single-walled nanotubes. In addition, even if uniform distribution is achieved, an active material may be damaged or the carbon nanotubes may be damaged during roll-pressing, resulting in causing a problem in the formation of a conductive path, which is also a problem that cannot be ruled out. However, in the present invention, as a means to overcome the above-described problems, an aspect ratio, a specific surface area, and a $D_{50}$ in a powder state are selected, and the relationship therebetween is clarified in order to implement a high-energy density electrode through optimal uniform distribution in an electrode, so that a conductivity performance index is introduced in the relationship with powder resistance.

Accordingly, the single-walled carbon nanotubes may have a specific surface area of 500 $m^2/g$ to 1,300 $m^2/g$. The specific surface area may preferably be 530 $m^2/g$ or greater, 550 $m^2/g$ or greater, or 570 $m^2/g$ or greater, and 1,200 $m^2/g$ or less, 1,100 $m^2/g$ or less, 1,000 $m^2/g$ or less, 900 $m^2/g$ or less, 850 $m^2/g$ or less, or 800 $m^2/g$ or less.

In addition, the single-walled carbon nanotubes may have a $D_{50}$ of 2.0 $\mu$m to 7.0 $\mu$m in a powder state. Preferably, the $D_{50}$ may be 2.3 $\mu$m or greater, 2.5 $\mu$m or greater, 2.7 $\mu$m or greater, or 3.0 $\mu$m or greater, and 6.8 $\mu$m or less, 6.6 $\mu$m or less, 6.4 $\mu$m or less, 6.2 $\mu$m or less, or 6.0 $\mu$m or less.

In addition, the single-walled carbon nanotubes may have an aspect ratio of 40 to 100, preferably 45 or greater, 50 or greater, or 55 or greater, and 90 or less, 85 or less, 80 or less, or 75 or less.

As described above, the uniform distribution in an electrode may be induced by appropriately adjusting a specific surface area of an appropriate level, a $D_{50}$ in a powder state, and an aspect ratio, and the disconnection of a conductive path may be minimized even in a pore generated by an electrochemical reaction of a cell.

In this case, the single-walled carbon nanotubes may have powder resistance of 0.001 Ωcm to 0.006 Ωcm, 0.0015 Ωcm or greater, 0.0017 Ωcm or greater, or 0.002 Ωcm or greater, and 0.0055 Ωcm or less, 0.0053 Ωcm or less, or 0.005 Ωcm or less, as measured at a packing density 0.4 g/cc to 0.6 g/cc.

According to an embodiment of the present invention, the conductive material may include two or more selected from the group consisting of carbon black, multi-walled carbon nanotubes, and single-walled carbon nanotubes. In this case, as the conductivity performance index, a value obtained by calculating a weight average by utilizing the conductivity performance index of each conductive material and the weight fraction of a conductive material mixed may be utilized, and may be calculated as shown in Equation 2 below.

$$[Equation\ 2]$$

$$P_{CTotal} = (P_{C1} \times w_1) + (P_{C2} \times w_2) + \ldots + (P_{Cn} \times w_n)$$

In Equation 2 above, $P_{CTotal}$ is the conductive performance index of a mixed conductive material, $P_{C1}$, $P_{C2}$ ... $Pcn_{Cn}$ are conductive performance indexes of respective conductive materials in the mixed conductive material, and $w_1$, $w_2$, ... $w_n$ are the weight fraction of each conductive material.

For example, in the case of a conductive material in which carbon black and multi-walled carbon nanotubes are mixed at a weight ratio of 3:7, and the conductivity performance indexes are respectively 2.00 and 0.50, the conductivity performance index of the mixed conductive material is calculated as "(2.00 x 0.3) + (0.50 x 0.7)" and may have a value of 0.95.

**Electrode**

The electrode according to another embodiment of the present invention includes an electrode current collector and an electrode active material layer disposed on the electrode current collector, wherein the electrode active material layer includes the above-described conductive material.

In this case, the conductive material is the above-described conductive material according to the present invention. The description of the conductive material is the same as that described above, and thus, a detailed description thereof will be omitted, and hereinafter, only the rest of the components will be described.

According to an embodiment of the present invention, the electrode active material may be a positive electrode active material, the electrode may be a positive electrode, wherein the positive electrode may include a positive electrode current collector, and a positive electrode active material layer formed on the positive electrode current collector and including the positive electrode active material.

In the positive electrode, the positive electrode current collector is not particularly limited as long as it has conductivity without causing a chemical change in the battery, and for example, stainless steel, aluminum, nickel, titanium, fired carbon, or aluminum or stainless steel that is surface-treated with one of carbon, nickel, titanium, silver, and the like may be used. Also, the positive electrode current collector may typically have a thickness of 3 μm to 500 μm, and microscopic irregularities may be formed on the surface of the positive electrode current collector to improve the adhesion of the positive electrode active material. For example, the positive electrode current collector may be used in various forms such as a film, a sheet, a foil, a net, a porous body, a foam, a non-woven body, and the like.

The positive electrode active material may include, for example, one or more selected from the group consisting of a lithium nickel-based oxide, a hyper-lithium manganese-based oxide, a lithium metal phosphate-based compound, a lithium nickel oxide, a lithium cobalt oxide, and a lithium manganese oxide.

Preferably, the positive electrode active material may be a single-particle type, and may include a lithium nickel-based oxide and/or a lithium metal phosphate-based compound, and the single-particle type positive electrode active material may have a degree of single-particleization $D_{50}/D_{mean}$ of 1 to 10. The single-particle type positive electrode active material has higher particle strength than a typical single-particle type positive electrode active material in the form of a secondary particle in which tens to hundreds of primary particles are aggregated, and thus, there is less particle breakage during roll-pressing. In addition, the single-particle type positive electrode active material according to the present invention has a small number of sub-components (i.e., nodules) constituting a particle, so that there is less change caused by volume expansion and contraction of primary particles during charging and discharging, and accordingly, the occurrence of cracks inside the particle is significantly reduced.

The smaller the degree of single-particleization, the more the single particle-type positive electrode active material particles have single-particle particle characteristics. Accordingly, the degree of single-particleization may preferably be 1 to 8, 1 to 7, 1 to 6, or 1 to 5, and if the above-described range is satisfied, the degree of particle breakage may be reduced and the roll-pressing density may also be improved, which can be expected to improve both lifespan properties and energy density.

According to an embodiment of the present invention, the single-particle type positive electrode active material may have a $D_{50}$ of 1.0 $\mu$m to 10.0 $\mu$m.

The single-particle positive electrode active material may have an average particle diameter at a 50% cumulative volume of particles of 1.0 $\mu$m to 10.0 $\mu$m, preferably 1.5 $\mu$m or greater, 1.7 $\mu$m or greater, 2.0 $\mu$m or greater, 2.5 $\mu$m or greater, or 3.0 $\mu$m or greater, and 9.0 $\mu$m or less, 8.0 $\mu$m or less, 7.5 $\mu$m or less, 7.0 $\mu$m or less, 6.5 $\mu$m or less, 6.0 $\mu$m or less, 5.5 $\mu$m or less, or 5.0 $\mu$m or less. If the volume cumulative average particle diameter $D_{50}$ of the single-particle type positive electrode active material satisfies the above-described range, there is an advantage in that the roll-pressing density may be increased without damage to the positive electrode active material particles.

According to an embodiment of the present disclosure, an average particle diameter $D_{mean}$ of nodules of the single-particle type positive electrode active material may be 0.2 $\mu$m to 3.0 $\mu$m, and the average particle diameter of the nodule may be preferably 0.5 $\mu$m or greater, 0.7 $\mu$m or greater, or 1.0 $\mu$m or greater, and 2.8 $\mu$m or less, 2.5 $\mu$m or less, or 2.0 $\mu$m or less, and if the above-described range is satisfied, the above-described range of the degree of single-particleization may also be satisfied, so that an effect resulting therefrom may be expected.

The single-particle type positive electrode active material according to the present invention may include a lithium nickel-based oxide, and may have, for example, a composition represented by Formula 1 below.

$$[Formula\ 1] \qquad Li_{1+x}Ni_aCo_bM^1_cM^2_dO_{2-e}X_e$$

In Formula 1 above, $M^1$ includes one or more selected from Mn and Al, $M^2$ includes one or more selected from the group consisting of W, Zr, Y, Ba, Ca, Ti, V, Mg, Ta, and Nb, X includes one or more selected from the group consisting of N, P, S, F, and Cl, and $0 \leq x \leq 0.1$, $0.5 \leq a < 1$, $0 < b \leq 0.35$, $0 < c \leq 0.35$, $0 \leq d \leq 0.05$, and $0 \leq e \leq 0.05$.

In Formula 1 above, $M^1$ is Mn, Al, or a combination thereof, preferably Mn, or a combination of Mn and Al, $M^2$ is one or more selected from the group consisting of Zr, W, Y, Ba, Ca, Ti, Mg, Ta, and Nb, preferably one or more selected from the group consisting of Zr, Y, Mg, and Ti, and more preferably Zr, Y, or a combination thereof. An $M^2$ element is not necessarily included, but when included in an appropriate amount, the $M^1$ element may serve to promote particle growth during firing or improve crystal structure stability. In addition, the X is an anion substituted in an oxygen site, and may include N, P, S, F, or Cl.

The 1+x represents the molar ratio of lithium in a single-particle type lithium nickel-based oxide, and may satisfy $0 \leq x \leq 0.1$, $0 \leq x \leq 0.08$, $0 \leq x \leq 0.05$, $0 \leq x \leq 0.03$, or $0 \leq x \leq 0.02$.

The a represents the molar ratio of nickel among all metals excluding lithium in the single-particle type lithium nickel-based oxide, and may satisfy $0.50 \leq a < 1.00$, $0.60 \leq a \leq 0.99$, $0.70 \leq a \leq 0.99$, or $0.75 \leq a \leq 0.99$, and $0.80 \leq a \leq 0.99$, $0.82 \leq a \leq 0.99$, $0.84 \leq a \leq 0.99$, or $0.86 \leq a \leq 0.99$.

The b represents the molar ratio of cobalt among all metals excluding lithium in the single-particle type lithium nickel-based oxide, and may satisfy $0 < b \leq 0.35$, $0.01 \leq b \leq 0.34$, $0.01 \leq b \leq 0.30$, $0.01 \leq b \leq 0.25$, $0.01 \leq b \leq 0.20$, or $0.01 \leq b \leq 0.15$.

The c represents the molar ratio of $M^1$ among all metals excluding lithium in the single-particle type lithium nickel-based oxide, and may satisfy $0 < c \leq 0.35$, $0.01 \leq c \leq 0.34$, $0.01 \leq c \leq 0.30$, $0.01 \leq c \leq 0.25$, $0.01 \leq c \leq 0.20$, or $0.01 \leq c \leq 0.15$.

The d represents the molar ratio of an $M^2$ element among all metals excluding lithium in the single-particle type lithium nickel-based oxide, and may satisfy $0 \leq d \leq 0.05$, $0 \leq d \leq 0.02$, or $0 \leq d \leq 0.01$.

The e represents the molar ratio of an X element among all non-metals excluding oxygen in the single-particle type lithium nickel-based oxide, and may satisfy $0 \leq e \leq 0.05$, $0 \leq e \leq 0.02$, or $0 \leq e \leq 0.01$.

In addition, the lithium metal phosphate-based compound may have a composition represented by Formula 2 below.

$$[Formula\ 2] \qquad Li_{1+x}[Fe_{1-y}M_y]PO_4$$

In Formula 2 above, M includes one or more selected from the group consisting of Mn, Co, Ni, Al, Mg, and Ti, and $-0.5 \leq x \leq 0.5$, and $0 \leq y < 1$.

The lithium metal phosphate-based compound may be doped with the M. In this case, the lattice structure and distance in an olivine crystal structure, which is a crystal structure, are changed, so that the diffusivity of lithium ions is increased, and as a result, electrochemical characteristics of a battery including the positive electrode active material may be improved.

The x may be -0.5 to 0.5, preferably -0.3 or greater, -0.1 or greater, or 0 or greater, and 0.5 or less, 0.4 or less, 0.3 or less, 0.2 or less, or 0.1 or less.

The y may be 0 or greater, and may be less than 1, and may be 0.90 or less, 0.80 or less, 0.70 or less, 0.60 or less, 0.50 or less, 0.40 or less, 0.30 or less, 0.20 or less, 0.10 or less, or 0.05 or less.

For example, the lithium metal phosphate-based compound may be, for example, $LiFePO_4$.

The lithium metal phosphate-based compound according to the present invention may be in the form of a single particle composed of only one primary particle, or in the form of an irregular secondary particle composed of 2 to 50 primary particles. In addition, the lithium metal phosphate-based compound may include an olivine structure, and specifically, may be formed of only the olivine structure. A coating layer according to the present invention may be formed not only on the secondary particle, but also on the primary particle. That is, the coating layer according to the present invention may be uniformly present on the surface of the primary particle present inside the secondary particle.

The coating layer may include a carbon coating layer of a graphite structure, and the coating layer may have a thickness of 0.5 nm to 5 nm. If the thickness of the coating layer is in the above-described range, there is an advantage in that the electrical conductivity is improved, and at the same time, the entry and exit of lithium ions is not interfered. Specifically, the thickness of the coating layer may be 0.5 nm or greater, 1.0 nm or greater, 1.5 nm or greater, 2.0 nm or greater, 2.5 nm or greater, or 3.0 nm or greater, and 5.0 nm or less.

The coating layer may be uniformly coated on the surface of the lithium metal phosphate-based compound. That is, the coating layer may be in the form of a thin film. The coating layer may improve ion conductivity and electronic conductivity during charging and discharging of a battery including a positive electrode active material. The coating layer may include impurities such as nitrogen, oxygen, and hydrogen in a trace amount in addition to carbon.

The coating layer may be included in an amount of 0.5 wt% to 3 wt% based on the total weight of the lithium metal phosphate-based compound so as not to interfere with the entry and exit of lithium ions while improving electrical conductivity.

The positive electrode active material layer may include a positive electrode conductive material and a positive electrode binder, together with the positive electrode active material described above.

A conductive material dispersion described above may be applied as the positive electrode conductive material, and in addition to the conductive material dispersion, a conductive material may be additionally included to impart conductivity to an electrode, and any conductive material may be used without particular limitation as long as it has electronic conductivity without causing a chemical change in a battery to be constituted.

Specific examples of the additional conductive material may include graphite such as natural graphite or artificial graphite; carbon black such as acetylene black, Ketjen black, channel black, furnace black, lamp black, and thermal black; a conductive fiber such as a carbon-based fiber or metal-based fiber; metal powder of such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

In addition, the positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

According to an embodiment of the present invention, the electrode active material may be a negative electrode active material, the electrode may be a negative electrode, wherein the negative electrode may include a negative electrode current collector, and a negative electrode active material layer formed on the negative electrode current collector and including the negative electrode active material.

The negative electrode current collector is not particularly limited as long as it has high conductivity without causing a chemical change in a battery, and for example, copper, stainless steel, aluminum, nickel, titanium, heat-treated carbon, copper or stainless steel that is surface-treated with one of carbon, nickel, titanium, silver, and the like, an aluminum-cadmium alloy, and the like may be used.

The negative electrode current collector may typically have a thickness of 3 $\mu$m to 500 $\mu$m, and microscopic irregularities may be formed on the surface of the current collector to improve the adhesion of the negative electrode active material. In addition, the negative electrode current collector may be used in various forms such as a film, a sheet, a foil, a net, a porous body, a foam, and a non-woven body.

As the negative electrode active material, a compound capable of reversible intercalation and deintercalation of lithium may be used, and for example, a carbonaceous material such as artificial graphite, natural graphite, Kish graphite, pyrolytic carbon, meso-carbon microbeads, mesophase pitches, petroleum or coal tar pitch derived cokes, mesophase pitch-based carbon fiber, graphitized carbon fiber, amorphous carbon, soft carbon, or hard carbon; a (semi-) metallic material alloyable with lithium, such as Si, Al, Sn, Pb, Zn, Bi, In, Mg, Ga, Cd, a Si alloy, a Sn alloy, or an Al alloy; a (semi-) metal oxide material capable of doping and dedoping lithium, such as $SiO_b(0<b\leq2)$, $SnO_2$, vanadium oxide, and lithium vanadium oxide; a heterogeneous composite material such as a Si-C composite or Sn-C composite; a metal lithium thin films, or the like, and any one thereof or a mixture of two or more thereof may be used.

Preferably, the negative electrode active material may include one or more selected from the group consisting of a silicon-based active material, a carbon-based active material, and a silicon-carbon composite active material, and more preferably, the carbon-based active material may include one or more selected from the group consisting of artificial graphite, natural graphite, soft carbon, and hard carbon, the silicon-based active material may include pure Si particles and/or $SiO_b(0<b\leq2)$, and the silicon-carbon composite active material may include a Si-C composite. In addition, as the negative electrode active material, a mixed active material in which two or more of the above-described materials are mixed may be used.

The negative electrode active material may be included in 60 wt% to 99 wt% based on the total weight of a negative electrode mixture layer, preferably 70 wt% or greater, 80 wt% or greater, 85 wt% or greater, 90 wt% or greater, and 98 wt% or less, 97 wt% or less, or 95 wt% or less.

The binder is a component for assisting in bonding between a conductive material, an active material, and a current collector, and is typically added in an amount of 0.1 wt% to 10 wt% based on the total weight of the negative electrode mixture layer, and may be included in an amount of 0.2 wt% or greater, 0.3 wt% or greater, or 0.5 wt% or greater, and 8 wt% or less, or 5 wt% or less. Examples of the binder may include one or more selected from the group consisting of a styrene-butadiene copolymer, an acrylate-styrene-butadiene copolymer, an acrylonitrile-butadiene copolymer, an acrylonitrile-butadiene-styrene copolymer, acrylic rubber, butyl rubber, fluorine rubber, polytetrafluoroethylene, polyethylene, polypropylene, an ethylenepropylene copolymer, a polyethylene oxide, polyvinylpyrrolidone, polyepichlorohydrin, polyphosphazene, polyacrylonitrile, polystyrene, an ethylenepropylenediene copolymer, polyvinylpyridine, chlorosulfonated polyethylene, latex, a polyester resin, an acrylic resin, a phenol resin, an epoxy resin, and polyvinyl alcohol. Among the above, the binder may include one or more selected from the group consisting of a styrene-butadiene copolymer, an acrylate-styrene-butadiene copolymer, an acrylonitrile-butadiene copolymer, an acrylonitrile-butadiene-styrene copolymer, carboxymethyl cellulose, hydroxypropylmethyl cellulose, hydroxypropyl cellulose, diacetyl cellulose, cellulose acetate butyrate, cellulose acetate propionate, cyanoethylpullulan, cyanoethyl polyvinyl alcohol, cyanoethyl cellulose, and cyanoethyl sucrose. Preferably, carboxymethyl cellulose, hydroxypropy methyl cellulose, hydroxypropyl cellulose, or a mixture thereof may be preferably applied.

The binder is a component for assisting in bonding between a conductive material, an active material, and a current collector, and is typically added in an amount of 0.1 wt% to 10 wt% based on the total weight of the negative electrode active material layer. Examples of the binder may include polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated-EPDM, styrene-butadiene rubber, nitrile-butadiene rubber, fluorine rubber, various copolymers thereof, and the like.

The conductive material is a component for further improving the conductivity of the negative electrode active material, and may be added in an amount of 10 wt% or less, preferably 5 wt% or less, 3 wt% or less, 2 wt% or less, or 1 wt% or less, and 0.01 wt% or greater, 0.05 wt% or greater, 0.08 wt% or greater, 0.1 wt% or greater, or 0.3 wt% or greater. The conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; conductive fiber such as carbon-based fiber or metal-based fiber; fluoro carbon; metal powder such as aluminum powder and nickel powder; a conductive whisker such as zinc oxide and potassium titanate; a conductive metal oxide such as titanium oxide; a conductive material such as a polyphenylene derivative, and the like may be used.

Meanwhile, the electrode slurry may further include a solvent, if necessary, to control viscosity and the like. At this time, the solvent may be water, an organic solvent, or a mixture thereof. The organic solvent may be, for example, an amide-based polar organic solvent such as dimethylformamide (DMF), diethylformamide, dimethylacetamide (DMAc), and N-methylpyrrolidone (NMP); an alcohol such as methanol, ethanol, 1-propanol, 2-propanol (isopropyl alcohol), 1-butanol (n-butanol), 2-methyl-1-propanol (isobutanol), 2-butanol (sec-butanol), 1-methyl-2-propanol (tert-butanol), pentanol, hexanol, heptanol, and octanol; a glycol such as ethylene glycol, diethylene glycol, triethylene glycol, propylene glycol, 1,3-propanediol, 1,3-butanediol, 1,5-pentanediol, and hexylene glycol; a polyhydric alcohol such as glycerin, trimethylol propane, pentaerythritol, and sorbitol; a glycol ether such as ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, and tetraethylene glycol monobutyl ether; a ketone such acetone, methyl ethyl ketone, methyl propyl ketone, and cyclopentanone; and an ester such as ethyl acetate, $\gamma$-butyl lactone, and $\varepsilon$-propiactone. Any one thereof and a mixture of two or more thereof may be used, but the organic solvent is not limited thereto.

The solvent may be included in a content such that the solid content in the electrode slurry is to be 60 wt% to 85 wt%, preferably 65 wt% to 80 wt%. When the above-described range is satisfied, binder migration may be suppressed, thereby improving electrode adhesion, the drying temperature may be lowered, thereby improving coatability, and the coating speed may be increased, thereby improving productivity.

The electrode according to the present invention may be manufactured by applying and then drying an electrode slurry including the above-described components, thereby forming an electrode active material layer on a current collector. Specifically, the electrode active material layer may be formed by a method in which an electrode slurry is applied on an electrode current collector and then dried, or by a method in which an electrode slurry is applied on a separate support, and then laminating a film obtained by being peeled off from the support on an electrode current collector. If necessary, after forming an electrode active material layer through the above method, a process of roll-pressing the same may be additionally performed. At this time, drying and roll-pressing may be performed under appropriate conditions in consideration of the physical properties of an electrode to be finally manufactured, and are not particularly limited.

**Lithium secondary battery**

The lithium secondary battery according to yet another embodiment of the present invention has a structure in which a positive electrode, a separator, and a negative electrode are sequentially stacked, and one or more of the positive electrode and the negative electrode is the electrode described above. Specifically, the lithium secondary battery according to the present invention may include a positive electrode, a negative electrode, a separator interposed between the positive electrode and the negative electrode, and an electrolyte, and in this case, the positive electrode and the negative electrode are the same as described above.

Hereinafter, only the rest of the components will be described.

According to an embodiment of the present invention, the separator is to separate the negative electrode and the positive electrode and to provide a movement path for lithium ions, and any separator may be used without particular limitation as long as it is a separator typically used in a lithium secondary battery. Specifically, as the separator, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric made of glass fiber having a high melting point, polyethylene terephthalate fiber, or the like may be used. Also, a coated separator including a ceramic component or a polymer material may be used to secure heat resistance or mechanical strength, and may selectively be used in a single-layered or multi-layered structure.

According to an embodiment of the present invention, examples of the electrolyte may include an organic liquid electrolyte, an inorganic liquid electrolyte, a solid polymer electrolyte, a gel-type polymer electrolyte, a solid inorganic electrolyte, a molten-type inorganic electrolyte, or the like, but is not limited thereto.

Specifically, the electrolyte may include a non-aqueous organic solvent and a lithium salt.

As the non-aqueous organic solvent, for example, an aprotic organic solvent, such as N-methyl-2-pyrrolidone, propylene carbonate, ethylene carbonate, butylene carbonate, dimethyl carbonate, diethyl carbonate, $\gamma$-butyrolactone, 1,2-dimethoxy ethane, tetrahydrofuran, 2-methyl tetrahydrofuran, dimethyl sulfoxide, 1,3-dioxolane, formamide, diemthylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate may be used.

Particularly, among the carbonate-based organic solvents, a cyclic carbonate such as ethylene carbonate and propylene carbonate may preferably be used since it is an organic solvent of high viscosity and has high dielectric constant to dissociate a lithium salt well. Such a cyclic carbonate may be more preferably used since when it is mixed with a linear carbonate of low viscosity and low dielectric constant such as dimethyl carbonate and diethyl carbonate in an appropriate ratio, an electrolyte having a high electric conductivity is prepared.

As the metal salt, a lithium salt may be used, and the lithium salt is a material which is easily dissolved in the non-aqueous electrolyte solution, and for example, as an anion of the lithium salt, one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$ may be used.

In the electrolyte, in order to improve the lifespan properties of a battery, to suppress the decrease in battery capacity, and to improve the discharge capacity of the battery, one or more additives, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, and the like may be further included other than the above electrolyte components.

**Examples**

Hereinafter, embodiments of the present invention will be described in detail so that those skilled in the art may easily carry out the present invention. However, the present invention may be embodied in many different forms, and is not limited to the embodiments set forth herein.

**Examples and Comparative Examples**

As for Examples 1a to 5a and Comparative Examples 1a to 3a, carbon black having characteristics described in Table 1 below was prepared, as for Examples 1b to 4b and Comparative Examples 1b to 3b, multi-walled carbon nanotubes having characteristics described in Table 2 below were prepared, and as for Examples 1c to 5c and Comparative Examples 1c to 2c, single-walled carbon nanotubes having characteristics described in Table 3 below were prepared.

The volume average particle diameter $D_{50}$ ($\mu$m) of the conductive material was obtained by introducing a laser diffraction particle size measurement device (Malvern Co., Mastersizer 3000) to measure the difference in diffraction pattern according to a particle size when particles pass through a laser beam, thereby calculating a particle size distribution. By identifying a particle diameter at a point of 50% in a volume cumulative distribution according to a particle diameter, a $D_{50}$ was measured.

The powder resistance (Ωcm) of the conductive material was measured by introducing 0.1 g of the conductive material into a cylinder-shaped geometry and then measuring surface resistance while increasing the pressure in a press machine in which the pressure was measured, and also measuring the volume which decreased as the pressure increased, thereby measuring the powder resistance when the packing density was 0.4 g/cc to 0.6 g/cc.

The specific surface area ($m^2$/g) of the conductive material was measured by a BET method, and was calculated from the adsorption amount of nitrogen gas under a liquid nitrogen temperature (77 K) using BELSORP-mino II of BEL Japan Co.

The aspect ratio of the conductive material was obtained by capturing images of more than 50 conductive materials through a scanning electron microscope (SEM), and then analyzing the obtained images through an image analysis program to obtain a ratio of a long axis and a short axis of each conductive material particle, followed by utilizing an average value of the values.

**Experimental Example 1: Battery performance evaluation 1 (Resistance characteristics)**

A single-particle type lithium nickel-based oxide having a composition of $LiNi_{0.6}Co_{0.1}Mn_{0.3}O_2$ was applied as a positive electrode active material, and the conductive material of each of Examples and Comparative Examples was applied to manufacture a positive electrode.

The positive electrode was manufactured as follows: the lithium nickel-based oxide, the conductive material, and a PVDF binder were mixed at a weight ratio of 97.0:1.2:1.8, followed by introducing a N-methylpyrrolidone solvent such that the solid content was to be 72%, and the mixture was mixed at 2,500 rpm for 1 hour using a homogenizer to prepare a positive electrode slurry. Thereafter, the slurry was applied on one side of an aluminum current collector, dried at 130 °C, and then roll-pressed twice at a linear pressure of 2,000 kgf/cm using roll-to-roll rolling equipment to manufacture the positive electrode.

Graphite particles having an average particle diameter $D_{50}$ of 50 $\mu$m were used as a negative electrode active material. A negative electrode including a negative electrode active material layer which includes the negative electrode active material, CMC as a negative electrode binder, and carbon nanotubes as a negative electrode conductive material at a weight ratio of 80:10:10 was manufactured. The negative electrode active material layer had a loading amount of 10 mAh/cm$^2$, and a thickness of 75 $\mu$m.

The positive electrode, the negative electrode, and a porous polyethylene separator were assembled using a winding method, and the assembled battery was injected with an electrolyte solution (ethylene carbonate (EC)/ethyl methyl carbonate (EMC)=3/7 (volume ratio)), and lithium hexafluorophosphate (1 mole of LiPF6) to manufacture a lithium secondary battery.

The lithium secondary battery was charged to 4.2 V at a 0.1 C C-rate, and then discharged to 2.5 V to proceed with an activation process.

After the lithium secondary battery was charged and discharged, the lithium secondary battery was fully charged and discharged again to measure diffusion resistance (0.1 to 30 sec resistance), and the results are shown in Tables 4 to 6.

**Experimental Example 2: Battery performance evaluation 2 (Lifespan characteristics)**

Each of the lithium secondary batteries manufactured in Experimental Example 3 above was charged (end current 1/20 C) to 4.25 V in a CCCV mode at 0.2 C. Thereafter, at 45 °C, each of the lithium secondary batteries was charged to 4.25 V at a constant current of 0.33 C, and then discharged to 2.5 V at a constant current of 0.33 C, the whole process of which was set to 1 cycle, and 100 cycles of the charge and discharge were performed to measure a capacity retention rate. The measurement results are shown in Tables 4 to 6 below.

In this case, the capacity retention rate was calculated as follows.

Capacity retention rate (%) = (discharge capacity after 100 cycles)/(discharge capacity after 1 cycle) X 100

## Evaluation results

### (1) Carbon black

Physical properties of the carbon black conductive materials of Examples 1a to 5a and Comparative Examples 1a to 3a are shown in Table 1 below, and the evaluation results of Experimental Examples 2 and 3 are shown in Table 2 below.

[Table 1]

|  | Powder resista nce | Packing density | Aspect ratio | $D_{50}$ | BET | Conduct ivity perform ance index |
|---|---|---|---|---|---|---|
| Example 1a | 0.16 | 0.5 | 1 | 1.00 | 299 | 2.68 |
| Example 2a | 0.22 | 0.5 | 1 | 1.05 | 320 | 3.27 |
| Example 3a | 0.26 | 0.5 | 1 | 1.10 | 590 | 2.00 |
| Example 4a | 0.24 | 0.6 | 1 | 1.15 | 867 | 1.44 |
| Example 5a | 0.36 | 0.4 | 1 | 1.20 | 1,078 | 1.11 |
| Comparative Example 1a | 0.07 | 1.0 | 1 | 0.70 | 65 | 15.39 |
| Comparative Example 2a | 0.22 | 0.6 | 1 | 0.90 | 135 | 10.86 |
| Comparative Example 3a | 0.07 | 1.0 | 1 | 0.65 | 63 | 17.09 |

[Table 2]

|  | Diffusion resistance (mΩ) | Capacity retention rate (%) |
|---|---|---|
| Example 1a | 1.2704 | 85.4 |
| Example 2a | 1.2484 | 84.9 |
| Example 3a | 1.3586 | 85.6 |
| Example 4a | 1.2946 | 86.0 |
| Example 5a | 1.3224 | 85.7 |
| Comparative Example 1a | 1.5307 | 80.1 |
| Comparative Example 2a | 1.4821 | 81.1 |
| Comparative Example 3a | 1.5968 | 80.5 |

Referring to Tables 1 and 2 above, in the case of Examples 1a to 5a which satisfy the conductivity performance index, it can be confirmed that the results show that the diffusion resistance was low and the lifespan was improved compared to Comparative Examples 1a to 3a. Particularly, in Comparative Examples 1a to 3a, although the powder resistance is high with respect to the packing density, and the average particle diameter of the conductive material is small, the specific surface area is even smaller, thereby preventing the number characteristics from being properly implemented, so that the conductivity was evaluated to be low, and accordingly, the resistance and life characteristics were determined to be poor.

### (2) Multi-walled carbon nanotubes

Physical properties of the multi-walled carbon nanotube conductive materials of Examples 1b to 4b and Comparative Examples 1b to 3b are shown in Table 3 below, and the evaluation results of Experimental Examples 2 and 3 are shown in Table 4 below.

[Table 3]

| | Powder resistance | Packing density | Aspect ratio | $D_{50}$ | BET | Conduct ivity perform ance index |
|---|---|---|---|---|---|---|
| Example 1b | 0.06 | 0.4 | 4 | 2.5 | 185 | 2.08 |
| Example 2b | 0.065 | 0.5 | 6 | 3.0 | 250 | 2.60 |
| Example 3b | 0.05 | 0.6 | 5 | 2.9 | 240 | 2.16 |
| Example 4b | 0.06 | 0.4 | 4 | 2.8 | 221 | 1.55 |
| Comparative Example 1b | 0.08 | 1.0 | 6 | 2.5 | 185 | 10.38 |
| Comparative Example 2b | 0.07 | 0.6 | 5 | 2.1 | 120 | 8.33 |
| Comparative Example 3b | 0.06 | 1.0 | 9 | 1.1 | 601 | 8.17 |

[Table 4]

| | Conductivity performance index | Diffusion resistance ($m\Omega$) | Capacity retention rate (%) |
|---|---|---|---|
| Example 1b | 2.08 | 1.2175 | 90.1 |
| Example 2b | 2.60 | 1.2170 | 89.7 |
| Example 3b | 2.16 | 1.3057 | 89.5 |
| Example 4b | 1.55 | 1.2572 | 89.0 |
| Comparative Example 1b | 10.38 | 1.3542 | 84.9 |
| Comparative Example 2b | 8.33 | 1.4116 | 85.2 |
| Comparative Example 3b | 8.17 | 1.4424 | 84.1 |

Referring to Tables 3 and 4 above, in the case of Examples 1b to 4b which satisfy the conductivity performance index, it can be confirmed that the results show that diffusion resistance was low and the lifespan was improved compared to Comparative Examples 1b to 3b. Particularly, in Comparative Examples 1b and 2b, there was a difference in conductivity due to high powder resistance with respect to the packing density while the content of the conductive material was the same, and in the case of Comparative Example 3b, there was a difference in conductivity due to a problem in uniform distribution caused by an excessive specific surface area, which can be proven from the data in the above table above.

## (3) Single-walled carbon nanotubes

Physical properties of the single-walled carbon nanotube conductive materials of Examples 1c to 5c and Comparative Examples 1c and 2c are shown in Table 5 below, and the evaluation results of Experimental Examples 2 and 3 are shown in Table 6 below.

[Table 5]

| | Powder resistance | Packing density | Aspect ratio | $D_{50}$ | BET | Conduct ivity perform ance index |
|---|---|---|---|---|---|---|
| Example 1c | 0.001 | 0.6 | 60 | 5.7 | 670 | 0.09 |
| Example 2c | 0.004 | 0.5 | 75 | 7.0 | 1.160 | 0.19 |
| Example 3c | 0.01 | 0.4 | 50 | 3.5 | 448 | 1.28 |
| Example 4c | 0.006 | 0.6 | 50 | 3.5 | 448 | 1.19 |
| Example 5c | 0.006 | 0.4 | 75 | 7.0 | 1.160 | 0.22 |
| Comparative Example 1c | 0.05 | 1.0 | 15 | 2.8 | 278 | 9.64 |
| Comparative Example 2c | 0.1 | 1.0 | 30 | 4.5 | 750 | 8.89 |

[Table 6]

| | Conductivity performance index | Diffusion resistance (mΩ) | Capacity retention rate (%) |
|---|---|---|---|
| Example 1c | 0.09 | 1.1866 | 92.3 |
| Example 2c | 0.19 | 1.1690 | 93.3 |
| Example 3c | 1.28 | 1.2704 | 92.7 |
| Example 4c | 1.19 | 1.1994 | 92.1 |
| Example 5c | 0.22 | 1.2057 | 93.0 |
| Comparative Example 1c | 9.64 | 1.3322 | 88.4 |
| Comparative Example 2c | 8.89 | 1.3763 | 87.9 |

Referring to Tables 5 and 6 above, in the case of Examples 1c to 5c which satisfy the conductivity performance index, it can be confirmed that the results show that diffusion resistance was low and the lifespan was improved compared to Comparative Examples 1c and 2c. Particularly, it can be seen that the above results were derived because the single-walled carbon nanotubes are a conductive material that is greatly affected by length characteristics, and in the case of Comparative Examples 1c and 2c, the small aspect ratio was not compensated for by the BET or $D_{50}$, and the powder resistance was high with respect to the packing density.

**Claims**

1.  A conductive material having a conductivity performance index ($P_C$) satisfying 0.03 to 8.10, which is defined by Equation 1 below:

$$[\text{Equation 1}]$$

$$P_C = [(AR \times R_P \times \rho_P) / (BET \times D_{50})] \times 10^4$$

wherein in Equation 1 above,

AR is an aspect ratio, which is a ratio of a long axis to a short axis of the conductive material,
$R_P$ and $\rho_P$ are respectively a powder resistance ($\Omega$cm) and a packing density (g/cc), wherein the powder resistance is $R_P$ as measured when the packing density is $\rho_P$ with respect to the conductive material,
BET is a specific surface area ($m^2$/g) of the conductive material,
$D_{50}$ is a volume cumulative 50% average particle diameter ($\mu$m) of the conductive material in a powder state, and
wherein in Equation 1 above, $R_P$, $\rho_P$, BET, and $D_{50}$ are non-unit numbers in which the above-described units are excluded.

2.  The conductive material of claim 1, wherein the conductive material comprises one or more selected from the group consisting of carbon black, multi-walled carbon nanotubes, and single-walled carbon nanotubes.

3.  The conductive material of claim 1, wherein the conductivity performance index ranges from 0.10 to 7.00.

4.  The conductive material of claim 1, wherein the conductivity performance index ranges from 0.30 to 5.00.

5.  The conductive material of claim 1, wherein the packing density $\rho_P$ ranges from 0.4 g/cc to 0.6 g/cc.

6.  The conductive material of claim 1, wherein the conductive material comprises carbon black, and the conductivity performance index ranges from 1.00 to 8.10.

7.  The conductive material of claim 1, wherein the conductive material comprises one or more selected from the group consisting of multi-walled carbon nanotubes, and single-walled carbon nanotubes, and the conductivity performance index ranges from 0.03 to 4.00.

8. The conductive material of claim 1, wherein the conductive material comprises multi-walled carbon nanotubes, and the conductivity performance index ranges from 0.30 to 3.90.

9. The conductive material of claim 1, wherein the conductive material comprises single-walled carbon nanotubes, and the conductivity performance index ranges from 0.03 to **1.50.**

10. An electrode comprising:

   an electrode current collector; and
   an electrode active material layer disposed on the electrode current collector, wherein the electrode active material layer includes the conductive material of claim 1.

11. The electrode of claim 10, wherein the electrode active material layer further comprises a positive electrode active material, wherein the positive electrode active material includes one or more selected from the group consisting of a lithium nickel-based oxide and a lithium metal phosphate-based compound.

12. The electrode of claim 11, wherein the lithium nickel-based oxide is a single-particle type, and has a degree of single-particleization $D_{50}/D_{mean}$ ranging from 1 to 10, which is a ratio of a volume cumulative average particle diameter $D_{50}$ to an average particle diameter $D_{mean}$ of nodules.

13. The electrode of claim 11, wherein:

   the lithium nickel-based oxide has a composition represented by Formula 1 below; and
   the lithium metal phosphate-based compound has a composition represented by Formula 2 below:

   $$[Formula\ 1] \quad Li_{1+x}Ni_aCo_bM^1_cM^2_dO_{2-e}X_e$$

   wherein in Formula 1 above, $M^1$ includes one or more selected from Mn and Al, $M^2$ includes one or more selected from the group consisting of W, Zr, Y, Ba, Ca, Ti, V, Mg, Ta, and Nb, X includes one or more selected from the group consisting of N, P, S, F, and Cl, and $0 \le x \le 0.1$, $0.5 \le a < 1$, $0 < b \le 0.35$, $0 < c \le 0.35$, $0 \le d \le 0.05$, and $0 \le e \le 0.05$:

   $$[Formula\ 2] \quad Li_{1+x}[Fe_{1-y}M_y]PO_4$$

   wherein in Formula 2 above, M includes one or more selected from the group consisting of Mn, Co, Ni, Al, Mg, and Ti, and $-0.5 \le x \le 0.5$, and $0 \le y < 1$.

14. The electrode of claim 10, wherein the electrode active material layer further comprises a negative electrode active material, wherein the negative electrode active material includes silicon-based particles.

15. A lithium secondary battery comprising a structure in which an electrode and a separator are alternately stacked, wherein the electrode is the electrode of claim 10.

**EP 4 632 847 A1**

## INTERNATIONAL SEARCH REPORT

| International application No. |
|---|
| **PCT/KR2024/014720** |

| A. | CLASSIFICATION OF SUBJECT MATTER |
|---|---|

**H01M 4/62**(2006.01)i; **H01M 4/131**(2010.01)i; **H01M 4/525**(2010.01)i; **H01M 4/134**(2010.01)i; **H01M 4/38**(2006.01)i; **H01M 10/052**(2010.01)i; **H01B 1/04**(2006.01)i; **H01B 5/02**(2006.01)i

According to International Patent Classification (IPC) or to both national classification and IPC

| B. | FIELDS SEARCHED |
|---|---|

Minimum documentation searched (classification system followed by classification symbols)

H01M 4/62(2006.01); H01G 11/24(2013.01); H01G 4/005(2006.01); H01G 4/008(2006.01); H01M 10/052(2010.01); H01M 10/0525(2010.01); H01M 4/131(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 도전재(conductor), 도전 성능 지수(conductivity performance index), 분체저항 (powder resistance), 충진밀도(packing density), 비표면적(specific surface area), 입경(particle size), 종횡비(aspect ratio)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2004-0019642 A (KOREA ELECTROTECHNOLOGY RESEARCH INSTITUTE et al.) 06 March 2004 (2004-03-06)<br>See claims 1 and 4; and paragraph [0004]. | 1-15 |
| A | KR 10-0750992 B1 (LG ELECTRONICS INC.) 22 August 2007 (2007-08-22)<br>See claims 1-7. | 1-15 |
| A | KR 10-2017-0111973 A (LG CHEM, LTD.) 12 October 2017 (2017-10-12)<br>See claims 1-17. | 1-15 |
| A | JP 6914609 B2 (TORAY INDUSTRIES, INC.) 04 August 2021 (2021-08-04)<br>See claims 1-6. | 1-15 |
| A | KR 10-2387963 B1 (DENKA COMPANY LIMITED) 18 April 2022 (2022-04-18)<br>See claims 1-10. | 1-15 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **09 January 2025** | **09 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/014720**

| Patent document cited in search report | | | Publication date (day/month/year) | Patent family member(s) | | | Publication date (day/month/year) |
|---|---|---|---|---|---|---|---|
| KR | 10-2004-0019642 | A | 06 March 2004 | KR | 10-0465022 | B1 | 13 January 2005 |
| KR | 10-0750992 | B1 | 22 August 2007 | KR | 10-2007-0069503 | A | 03 July 2007 |
| KR | 10-2017-0111973 | A | 12 October 2017 | CN | 108430920 | A | 21 August 2018 |
| | | | | CN | 108430920 | B | 15 February 2022 |
| | | | | EP | 3438045 | A2 | 06 February 2019 |
| | | | | EP | 3438045 | B1 | 05 January 2022 |
| | | | | KR | 10-2045524 | B1 | 18 November 2019 |
| | | | | US | 10857524 | B2 | 08 December 2020 |
| | | | | US | 2019-0060878 | A1 | 28 February 2019 |
| | | | | WO | 2017-171291 | A2 | 05 October 2017 |
| | | | | WO | 2017-171291 | A3 | 14 December 2017 |
| JP | 6914609 | B2 | 04 August 2021 | CA | 2962721 | A1 | 14 April 2016 |
| | | | | CA | 2962721 | C | 14 July 2020 |
| | | | | CN | 107108225 | A | 29 August 2017 |
| | | | | EP | 3205624 | A1 | 16 August 2017 |
| | | | | EP | 3205624 | B1 | 06 March 2019 |
| | | | | JP | 2017-056557 | A1 | 20 July 2017 |
| | | | | JP | 2020-100556 | A | 02 July 2020 |
| | | | | JP | 6939931 | B2 | 22 September 2021 |
| | | | | KR | 10-2017-0057247 | A | 24 May 2017 |
| | | | | KR | 10-2189514 | B1 | 11 December 2020 |
| | | | | US | 10230111 | B2 | 12 March 2019 |
| | | | | US | 2017-0346098 | A1 | 30 November 2017 |
| | | | | WO | 2016-056557 | A1 | 14 April 2016 |
| KR | 10-2387963 | B1 | 18 April 2022 | CN | 109690845 | A | 26 April 2019 |
| | | | | CN | 117673358 | A | 08 March 2024 |
| | | | | EP | 3512012 | A1 | 17 July 2019 |
| | | | | EP | 3512012 | B1 | 01 September 2021 |
| | | | | JP | 2019-047454 | A1 | 24 June 2019 |
| | | | | JP | 7034077 | B2 | 11 March 2022 |
| | | | | KR | 10-2019-0045198 | A | 02 May 2019 |
| | | | | US | 11264616 | B2 | 01 March 2022 |
| | | | | US | 2019-0198879 | A1 | 27 June 2019 |
| | | | | WO | 2018-047454 | A1 | 15 March 2018 |

Form PCT/ISA/210 (patent family annex) (July 2022)